# DEMANDE DE BREVET EUROPEEN

(11) **EP 2 667 084 A1**
(43) Date de publication de la demande: **27.11.2013**
(21) Numéro de dépôt: 13354019.5
(22) Date de dépôt: 27.05.2013
(51) Int. Cl.: F21L 4/00, F21V 23/00, F21V 25/00, H02H 7/20, H05B 37/00, H02H 7/00

(54) **Lampe électrique portative à dispositif de limitation en courant**

(30) Priorité: 25.05.2012 FR 1201511
(71) Demandeur: Zedel, 38920 Crolles (FR)
(72) Inventeur: Pellat-Finet, Romain, F-38000 Grenoble (FR); Bouzghoub, Omar, F- 38420 Domène (FR)
(74) Mandataire: Hecké, Gérard

(57) **Abrégé**

Lampe électrique portative comprenant un module d'éclairage (2), et un boîtier compact (3) renfermant une source d'alimentation (4) pour alimenter le module d'éclairage (2) et un dispositif de limitation (5) d'un courant (In) délivré par la source d'alimentation (4), le dispositif de limitation (5) comprenant un interrupteur commandé de limitation (Q1) couplé entre une borne de référence (Bref) de la source d'alimentation (4) et une borne de sortie (B3) du module d'éclairage (2), le dispositif de limitation (5) étant configuré pour déterminer une tension d'alimentation (VRSH) entre une borne de sortie de l'interrupteur de limitation (Q1) et la borne de référence (Bref), et pour commander l'interrupteur de limitation (Q1) de façon qu'il soit dans un état fermé lorsque la tension d'alimentation (VRSH) est inférieure ou égale à une consigne de tension, et dans un état ouvert sinon.

## Description

### Domaine technique de l'invention

L'invention est relative à une lampe électrique portative à dispositif de limitation en courant, et en particulier à une lampe électrique portative utilisée en milieu explosif, notamment une lampe électrique frontale à boîtier compact.

### État de la technique

Actuellement, on utilise des lampes électriques portatives à faible encombrement comprenant un module d'éclairage logé dans un boîtier ayant un corps compact. Généralement, la lampe comporte un support muni d'une sangle permettant de porter la lampe sur la tête. De telles lampes peuvent être utilisées en milieu explosif et doivent respecter des normes de sécurité contraignantes. On peut citer par exemple la réglementation ATEX (Atmosphères Explosives), issue de directives européennes relatives aux équipements et la sécurité des travailleurs. En effet, les normes actuelles imposent une limitation du courant d'alimentation des modules d'éclairage des lampes, à une valeur telle qu'un défaut de la lampe ne puisse ni entraîner un échauffement ni une étincelle pouvant provoquer une inflammation.

Certaines lampes sont équipées d'un dispositif de limitation en courant comprenant une résistance montée en série avec un fusible. Mais ce dispositif de limitation a l'inconvénient de consommer de l'énergie pour les lampes ayant un éclairage puissant. En outre, ce dispositif impose un fonctionnement nominal environ 1,7 fois inférieur à la limite thermique imposée par la norme, car selon les spécifications générales, le courant de claquage d'un fusible est environ 1,7 fois supérieur au courant nominal. Par ailleurs, ce dispositif de limitation nécessite le remplacement du fusible à chaque mauvaise manipulation de l'utilisateur, par exemple lors d'un court-circuit avec un outil, une immersion de la lampe, etc. Ceci impose nécessairement un démontage de la lampe, ou une mise au rebut. En outre, un tel dispositif de limitation a tendance à s'échauffer, et en utilisation normale, le courant maximum autorisé est environ égal à 35% du courant maximum d'échauffement, afin de garantir la non destruction du fusible et afin de respecter les conditions d'échauffement des lampes fixées par les normes. Les contraintes imposées sur le courant maximum ne permettent pas d'utiliser des lampes à forte puissance d'éclairage.

On peut citer le brevet américain US 7081722 qui divulgue un circuit de commande de plusieurs diodes électroluminescentes (notées LEDs) en mode séquentiel. Le circuit comprend des transistors utilisés comme des interrupteurs pour commander un groupe de LEDs afin de réduire la dissipation de puissance en désactivant un groupe amont lorsque le groupe suivant aval est mis en marche. On peut également citer la demande de brevet américain US 2007/0109773 qui divulgue une lampe électrique comprenant un régulateur de puissance muni d'un interrupteur commandé pour limiter une puissance délivrée par une source d'alimentation extérieure à la lampe. Mais ces dispositifs ne permettent pas de maîtriser la limitation en courant au plus proche de la valeur nominale de l'utilisation de la lampe.

### Objet de l'invention

L'objet de l'invention consiste à pallier ces inconvénients, et en particulier à réaliser une lampe électrique portative suffisamment compacte ayant des moyens pour limiter le courant délivré par la source d'alimentation.

Un autre objet de l'invention est de proposer une lampe électrique portative qui conserve un niveau de performance élevé en puissance d'éclairage, en autonomie et en rendement.

Selon un aspect de l'invention, il est proposé une lampe électrique portative comprenant un module d'éclairage, et un boîtier compact renfermant une source d'alimentation pour alimenter le module d'éclairage et un dispositif de limitation d'un courant délivré par la source d'alimentation.

Le dispositif de limitation comprend un dispositif de commande et un transistor de limitation dont le drain est couplé à une borne de sortie du module d'éclairage et la grille est couplée à une borne de sortie du dispositif de commande, le dispositif de limitation comprenant un élément résistif couplé entre une borne de référence de la source d'alimentation et la source du transistor de limitation, le dispositif de commande étant configuré pour déterminer une tension d'alimentation aux bornes de l'élément résistif et pour commander le transistor de limitation de façon qu'il soit dans un état fermé lorsque la tension d'alimentation est inférieure ou égale à une consigne de tension.

Le dispositif de limitation comporte en outre un dispositif de protection thermique configuré pour maintenir le transistor de limitation dans un état ouvert lorsque la tension entre le drain et la source du transistor de limitation est supérieure à une tension de référence.

Le dispositif de limitation assure un minimum de pertes énergétiques, et il est particulièrement adapté à des éclairages puissants. En outre, un tel dispositif de limitation permet de maîtriser la limitation en courant au plus proche de la valeur nominale de l'utilisation de la lampe. On peut ainsi atteindre une limite thermique en fonctionnement nominal sans dépasser celle imposée par la norme en cas de défaut de la lampe.

Ainsi, on fournit un dispositif de limitation qui permet de limiter le courant délivré au module d'éclairage, tout en limitant l'échauffement de la lampe. Par ailleurs, il est possible d'utiliser un courant délivré maximum correspondant à environ 95% du courant maximum d'échauffement fixé par les normes.

Le transistor de limitation peut être un transistor du type NMOS.

Le dispositif de protection thermique peut comprendre un interrupteur commandé de protection couplé entre la sortie du dispositif de commande et la borne de référence, le dispositif de protection thermique étant configuré pour maintenir l'interrupteur de protection dans un état fermé lorsque la tension entre le drain et la source du transistor de limitation est supérieure à la tension de référence.

Selon un mode de réalisation, l'interrupteur de protection est un transistor de protection du type bipolaire dont la base est couplée à la borne de sortie du module d'éclairage, la tension de référence étant égale à la tension de seuil du transistor de protection.

Selon un autre mode de réalisation, le dispositif de protection thermique comprend un capteur de température, et commande l'interrupteur de protection dans l'état fermé lorsque la température du transistor de limitation est supérieure à une température de référence.

Le dispositif de commande peut en outre comprendre un comparateur de tension ayant une sortie couplée à la borne de sortie du dispositif de commande, et deux entrées respectivement couplées aux deux bornes de l'élément résistif pour déterminer la tension d'alimentation.

La lampe peut également comprendre un dispositif de limitation supplémentaire pour limiter le courant d'alimentation délivré par la source d'alimentation, le dispositif de limitation supplémentaire comprenant un dispositif de commande supplémentaire et un interrupteur commandé supplémentaire couplé entre ledit transistor de limitation et la borne de sortie du module d'éclairage, l'interrupteur commandé supplémentaire comprenant un organe de commande couplé à une borne de sortie du dispositif de commande supplémentaire, le dispositif de commande supplémentaire étant configuré pour déterminer la tension d'alimentation et pour commander l'interrupteur supplémentaire de façon qu'il soit dans un état fermé lorsque la tension d'alimentation est inférieure ou égale à la consigne de tension.

L'interrupteur commandé supplémentaire peut être un transistor de limitation supplémentaire et le dispositif de limitation supplémentaire comporte en outre un dispositif de protection thermique supplémentaire comportant un transistor de protection supplémentaire du type bipolaire, le dispositif de protection thermique supplémentaire étant configuré pour maintenir les transistors de limitation dans l'état ouvert lorsque la tension base-émetteur des transistors de protection est supérieure à leur tension de seuil.

Le transistor de protection supplémentaire peut être couplé entre la borne de référence, et d'une part la borne de sortie du dispositif de commande, et d'autre part la borne de sortie du dispositif de commande supplémentaire, la base du transistor de protection supplémentaire étant couplée à la borne de sortie du module d'éclairage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

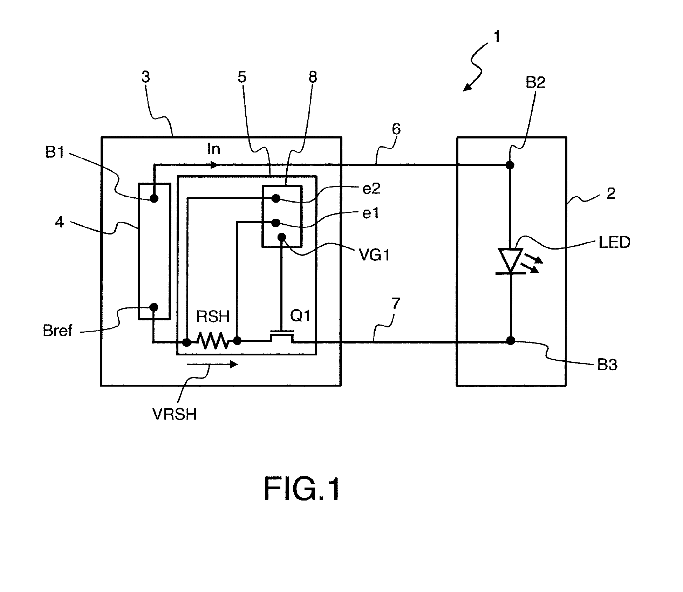

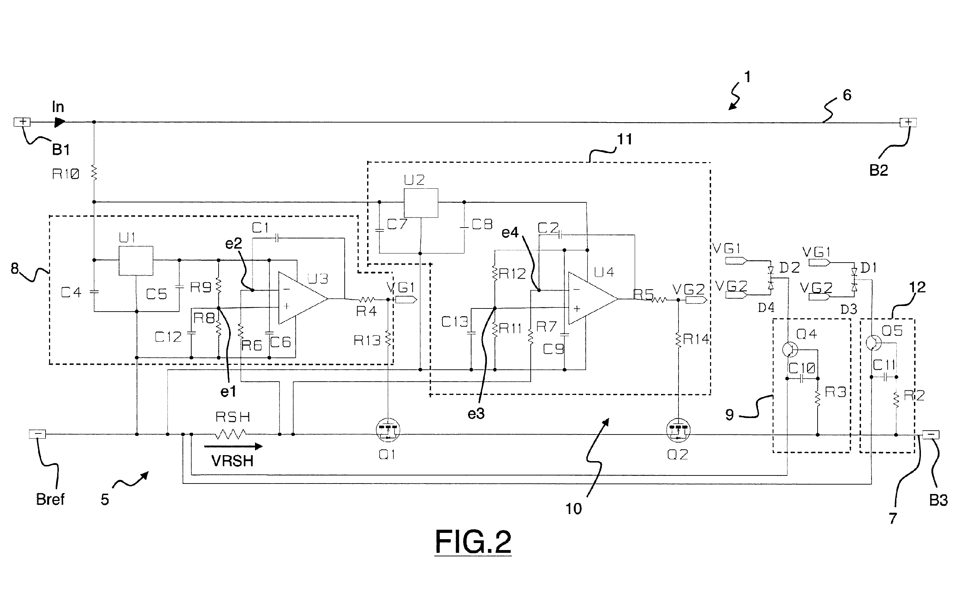

- les figures 1 et 2, illustrent schématiquement des modes de réalisation d'une lampe électrique portative selon l'invention.

### Description détaillée

Sur la figure 1, on a représenté de façon schématique une lampe électrique portative 1 comprenant un module d'éclairage 2 et un boîtier compact 3 renfermant une source d'alimentation 4, telle une pile ou une batterie, pour délivrer un courant d'alimentation In au module d'éclairage 2, et un dispositif de limitation en courant 5 pour limiter le courant d'alimentation In. Le module d'éclairage 2 comporte, de préférence, une diode électroluminescente (LED) et des commandes d'éclairage. Le module d'éclairage 2 peut également comporter plusieurs LED, en particulier des LED à forte puissance d'éclairage. La lampe électrique portative 1 peut être une lampe frontale, ou une lampe torche, et le boîtier compact 3 peut être réalisé en matériau isolant ou métallique. Selon un mode de réalisation, le module d'éclairage 2 est séparé du boîtier compact 3, et la source d'alimentation 4 est couplée au module d'éclairage 2 via des fils électriques 6, 7 inclus chacun dans une gaine isolante. Selon un autre mode de réalisation, le module d'éclairage 2 est inclus au sein du boîtier compact 3. En outre, la source d'alimentation 4 comprend une borne de référence Bref et une borne de sortie B1 pour délivrer le courant In. Le module d'éclairage 2 comporte, quant à lui, une borne d'entrée B2 et une borne de sortie B3 respectivement couplées aux fils électriques 6, 7 pour alimenter la LED. Le dispositif de limitation 5 comporte un dispositif de commande 8, un interrupteur électronique commandé Q1, noté interrupteur de limitation, et un élément résistif RSH, préférentiellement une résistance. L'interrupteur de limitation Q1 est couplé entre la borne de référence Bref, par l'intermédiaire de l'élément résistif RSH, et la borne de sortie B3 du module d'éclairage 2. En outre, l'interrupteur de limitation Q1 comporte un organe de commande couplé à une borne de sortie VG1 du dispositif de commande 8. Le dispositif de commande 8 comporte en outre deux entrées e1, e2, respectivement couplées aux bornes de l'élément résistif RSH de façon à pouvoir déterminer une tension d'alimentation VRSH entre une borne de sortie de l'interrupteur Q1 et la borne de référence Bref. L'interrupteur de limitation Q1 peut être un interrupteur du type MEMS (Micro Electro Mechanical System en langue anglaise) ou un transistor, de préférence un transistor du type NMOS.

Le dispositif de commande 8 est configuré pour commander l'état de l'interrupteur de limitation Q1, en ouverture et en fermeture. De manière générale, le dispositif de commande 8 commande l'interrupteur de limitation Q1 de façon qu'il soit dans un état fermé lorsque la tension d'alimentation VRSH est inférieure ou égale à une consigne de tension Vpont, et dans un état ouvert sinon. Ainsi, en fonctionnement normal, la tension d'alimentation VRSH est inférieure à Vpont et l'interrupteur Q1 est dans l'état fermé pour alimenter la LED. En cas de court-circuit, la tension d'alimentation est supérieure à Vpont, le dispositif de commande 8 commande l'interrupteur Q1 en ouverture et la valeur du courant d'alimentation In chute. Ainsi, la tension d'alimentation VRSH chute également jusqu'à être inférieure à Vpont, et le dispositif de commande 8 commande à nouveau la fermeture de l'interrupteur Q1 pour alimenter la LED. En particulier la consigne de tension Vpont est ajustée pour être égale à la tension aux bornes de l'élément résistif RSH lorsqu'il est parcouru par un courant maximum Imax souhaité. Le courant maximum Imax est déterminé de manière que la lampe 1 ne présente pas d'échauffement pouvant entraîner une inflammation, même si le dispositif de commande 8 et/ou le dispositif de limitation 5 est en défaut.

Grâce à un tel dispositif de limitation 5, on limite donc le courant d'alimentation In délivré à la LED. En particulier, on limite le courant d'alimentation In à la valeur maximum Imax, tel que :
Imax=Vpont/RSH
avec
   - Imax : le courant maximum délivré à la LED ;
   - Vpont : la consigne de tension ;
   - RSH : la Valeur de la résistance de l'élément résistif.

Un tel dispositif de limitation 5 est particulièrement adapté pour des LED à forte puissance d'éclairage qui nécessitent d'être alimentées par une source d'alimentation 4 configurée pour délivrer un courant d'alimentation In supérieur à 1 Ampère, de préférence de l'ordre de l'Ampère. Par exemple on peut souhaiter un courant maximum Imax=1,5 A qui ne génère pas d'échauffement intempestif, et prendre Rsh=100 mΩ et Vpont=0,15 Volt.

Sur la figure 2, on a représenté schématiquement un autre mode de réalisation de la lampe électrique portative 1. On a également reporté sur la figure certains éléments décrits à la figure 1. Dans cet autre mode de réalisation, l'interrupteur de limitation Q1 est un transistor du type NMOS dont la grille est couplée à la sortie VG1, via une résistance R13, la source est couplée à une borne de la résistance RSH et le drain est couplé à la borne de sortie B3 du module d'éclairage 2, soit directement, soit via un interrupteur électronique supplémentaire Q2 dont le rôle sera décrit ultérieurement. En outre, le dispositif de commande 8 comporte un amplificateur opérationnel U3 monté en comparateur de tension. L'amplificateur U3 comporte des première et deuxième entrées +, - couplées respectivement aux entrées e1, e2 du dispositif de commande 8, et une sortie couplée à la sortie VG1, via une résistance R4. Par ailleurs, la sortie de l'amplificateur U3 est couplée à la deuxième entrée e2 via un condensateur de découplage C1, la première entrée e1 du dispositif de commande 8 est couplée à la borne de référence Bref, par l'intermédiaire d'une résistance R8 et d'un condensateur de découplage C12 montés en parallèle, et la deuxième entrée e2 est couplée à la source de Q1 via une résistance R6. Le dispositif de commande 8 comporte en outre une résistance R9 couplée entre la première entrée e1 et la broche d'alimentation positive de l'amplificateur U3. Le dispositif de commande 8 comporte également un régulateur de tension U1 et d'autres condensateurs C4 à C6 de découplage de manière à fournir une consigne de tension Vpont stable. En outre, le régulateur U1 permet de fournir une tension stable pour alimenter l'amplificateur opérationnel U3.

Avantageusement, le dispositif de limitation 5 peut comprendre une résistance R10 couplée entre le régulateur en tension U1 et la borne de sortie B1 de la source d'alimentation. La résistance R10 permet de limiter la puissance disponible pour le dispositif de commande 8.

Les résistances R8, R9 permettent d'établir la consigne de tension Vpont de façon que Vpont = (R8/(R8+R9))·Vref, où Vref représente la tension aux bornes des résistances R8 et R9 montées en série. La résistance RSH permet de créer une chute de tension VRSH image du courant qui la traverse, c'est-à-dire du courant d'alimentation In délivré à la LED. En d'autres termes, l'amplificateur opérationnel U3 contrôle le courant d'alimentation In en comparant la tension d'alimentation VRSH avec la consigne de tension Vpont. En outre l'amplificateur U3 fournit une tension de commande Vout sur la grille du transistor Q1 pour commander ce dernier.

Lorsque la LED est alimentée, elle consomme un courant In inférieur à Imax et la tension d'alimentation VRSH est inférieure à Vpont. Dans ce cas, la différence entre la consigne de tension et la tension d'alimentation Vpont-VRSH est positive, et la tension de sortie Vout de l'amplificateur U3 est saturée à l'état haut et est égale à Vref. Le transistor de limitation Q1 est alors commandé avec une tension de grille VGS égale à Vref, il est dans un état passant, et le courant d'alimentation In circule dans la LED.

Lorsque la lampe 1 est en défaut, par exemple en cas de court-circuit, le courant d'alimentation In augmente et devient supérieur à Imax. Dans ce cas, la tension d'alimentation VRSH devient supérieure à Vpont, les entrées +, - de l'amplificateur U3 s'inversent et la tension Vout de sortie chute. Le transistor de limitation Q1 n'est plus passant car la tension de grille VGS ne permet plus de commander le transistor de limitation Q1 et le courant d'alimentation In chute. On est donc en fonctionnement linéaire dans lequel l'amplificateur U3 commande le transistor Q1 en un point de fonctionnement stable permettant de laisser passer le courant d'alimentation In dont la valeur est égale à Imax.

Le dispositif de limitation 5 peut en outre comprendre un dispositif de protection thermique 9 afin d'éviter un échauffement intempestif du transistor de limitation Q1. En d'autres termes, le dispositif de protection thermique 9 empêche la puissance dissipée au sein du transistor de limitation Q1 de dépasser un certain seuil correspondant à un échauffement intempestif. Le dispositif de protection thermique 9 est configuré pour maintenir l'interrupteur de limitation Q1 dans l'état ouvert lorsque l'échauffement de l'interrupteur de limitation Q1 est supérieur à un seuil de référence. Ainsi, on limite le courant d'alimentation de la LED tout en empêchant l'interrupteur de limitation Q1 de chauffer. En effet, en cas de court-circuit, l'interrupteur Q1 est dans l'état fermé et laisse passer un courant maximum Imax pendant un certain temps, ce qui crée un échauffement de l'interrupteur Q1. On peut éventuellement diminuer l'échauffement du transistor de limitation Q1 en utilisant un transistor de limitation Q1 ayant une taille importante. Avantageusement, le dispositif de protection thermique 9 permet, notamment, de diminuer la taille du transistor de limitation Q1 utilisé et de rendre ainsi la lampe 1 plus compacte.

Par exemple, le dispositif de protection thermique 9 peut comprendre un interrupteur électronique commandé de protection Q4, de préférence un transistor du type bipolaire NPN, couplé entre la sortie VG1 du dispositif de commande 8, par l'intermédiaire d'une diode D2, et la borne de référence Bref, et dont la base est couplée à la borne de sortie B3 du module d'éclairage 2 par l'intermédiaire d'une résistance R3. Avantageusement, le dispositif de protection thermique 9 comporte un condensateur de découplage C10 monté en parallèle de la résistance R3. Ainsi, le transistor de protection Q4 est configuré pour être dans un état bloqué, dans lequel il ne conduit pas, lorsque sa tension base-émetteur Vbe est inférieure à sa tension de seuil, par exemple 0,7 Volt. En outre, le transistor de protection Q4 est dans un état passant, dans lequel il conduit, lorsque sa tension base-émetteur Vbe est supérieure ou égale à sa tension de seuil. D'après le montage du transistor de protection Q4, on a la relation suivante :
Vbe = VRSH + VQ1
avec
   - Vbe : la tension base-émetteur du transistor de protection Q4 ;
   - VRSH : la tension aux bornes de la résistance RSH ;
   - VQ1 : la tension aux bornes du transistor de limitation Q1, c'est-à-dire la tension entre le drain et la source du transistor Q1.

En fonctionnement normal, c'est-à-dire hors court-circuit, le courant d'alimentation In est inférieur à Imax, VRSH est inférieure à Vpont, et la tension VQ1 est nulle. La tension base-émetteur Vbe du transistor de protection Q4 est donc égale à VRSH. Par conséquent, la tension base-émetteur Vbe du transistor de protection Q4 est inférieure à sa tension de seuil et le transistor Q4 ne conduit pas. En cas de court-circuit, un courant Imax parcourt le transistor de limitation Q1 et la tension VQ1 augmente jusqu'à atteindre une valeur égale à la différence Vref-VRSH entre la tension aux bornes des résistances R8 et R9 montées en série et la tension aux bornes de la résistance RSH, avec Vref ayant une valeur supérieure à la tension de seuil du transistor de protection Q4. Dans ce cas, on considère que le transistor de limitation Q1 s'échauffe au-delà d'une limite acceptable.

D'après la relation Vbe = VRSH + VQ1, la tension base-émetteur Vbe du transistor de protection Q4 augmente également et devient supérieure à sa tension de seuil, et le transistor de protection Q4 conduit. En outre, lorsque le transistor de protection Q4 conduit, la diode D2 amène la tension de sortie Vout de l'amplificateur U3 à la valeur de la tension de la borne de référence Bref. Dans ce cas, la tension de la grille du transistor de limitation Q1 est égale à celle de la borne de référence Bref et le transistor de limitation Q1 est alors dans l'état bloqué où il ne conduit pas. Ainsi le dispositif de limitation 5 est isolé électriquement, la tension VRSH chute et le courant d'alimentation In devient nul, ce qui empêche l'échauffement du transistor de limitation Q1. On choisit, de préférence, une valeur pour la consigne de tension Vpont qui est inférieure à la tension de seuil du transistor de protection Q4.

En variante, le dispositif de protection thermique 9 peut comprendre un comparateur de tension configuré pour commander le transistor de protection Q4 dans l'état fermé lorsque la tension aux bornes du transistor de limitation Q1 est supérieure à une tension de référence pour laquelle on considère que le transistor Q1 s'échauffe. Par exemple la tension de référence est égale à la tension de seuil du transistor de protection Q4.

Selon une autre variante, le dispositif de protection thermique 9 comprend un capteur de température, et est en outre configuré pour commander l'interrupteur de protection Q4 dans l'état fermé lorsque la température de l'interrupteur de limitation Q1 est supérieure à une température de référence pour laquelle on considère que le transistor de limitation Q1 a atteint une limite d'échauffement.

Avantageusement, la lampe électrique portative 1 peut comporter un dispositif de limitation supplémentaire 10 pour assurer une redondance de la limitation du courant d'alimentation In. Le dispositif de limitation supplémentaire 10 comporte un dispositif de commande supplémentaire 11 pour commander l'interrupteur électronique supplémentaire Q2, noté interrupteur de limitation supplémentaire. L'interrupteur de limitation supplémentaire Q2 peut être un interrupteur du type MEMS. De préférence, l'interrupteur de limitation supplémentaire Q2 est un transistor du type NMOS dont la source est couplée avec le drain du transistor de limitation Q1, le drain est couplé à la borne de sortie B3 du module d'éclairage 2 et la grille est couplée à une borne de sortie VG2 du dispositif de commande supplémentaire 11 via une résistance R14. Le dispositif de commande supplémentaire 11 comporte deux entrées e3, e4, respectivement couplées aux bornes de l'élément résistif RSH de façon à pouvoir déterminer la tension d'alimentation VRSH. En outre, le dispositif de commande supplémentaire 11 comporte un amplificateur opérationnel U4 monté en comparateur de tension. L'amplificateur U4 comporte des première et deuxième entrées +, - couplées respectivement aux entrées e3, e4 du dispositif de commande supplémentaire 11, et une sortie couplée à la borne de sortie VG2, via une résistance R5. Par ailleurs, la sortie de l'amplificateur U4 est couplée à la deuxième entrée e4 via un condensateur de découplage C2, la première entrée e3 du dispositif de commande supplémentaire 11 est couplée à la borne de référence Bref, par l'intermédiaire d'une résistance R11 et d'un condensateur de découplage C13 montés en parallèle, et la deuxième entrée e4 est en outre couplée à la source du transistor de limitation Q1 via une résistance R7. Le dispositif de commande supplémentaire 11 comporte en outre une résistance R12 couplée entre la première entrée e3 et la broche d'alimentation positive de l'amplificateur U4. Le dispositif de commande supplémentaire 11 comporte également un régulateur de tension U2 et d'autres condensateurs C7 à C9 de découplage de manière à fournir une deuxième consigne de tension Vpont2 stable à l'amplificateur U4. La deuxième consigne de tension Vpont2 est déterminée par la relation suivante : Vpont2 = (R11/(R11+R12)).Vref2 ; où Vref2 représente la tension aux bornes des résistances R11 et R12 montées en série. De préférence, la deuxième consigne de tension Vpont2 est égale à la première Vpont. Le dispositif de commande supplémentaire 11 est configuré pour commander l'interrupteur de limitation supplémentaire Q2 de façon qu'il soit dans un état fermé lorsque la tension d'alimentation VRSH est inférieure ou égale à la deuxième consigne de tension Vpont2, et dans un état ouvert sinon. En outre, le transistor de protection Q4 a son émetteur couplé à la sortie VG2 du dispositif de commande supplémentaire 11 via une diode supplémentaire D4. Ainsi le dispositif de protection thermique 9 empêche simultanément l'échauffement des deux transistors de limitation Q1, Q2.

Avantageusement, le dispositif de limitation supplémentaire 10 peut en outre comprendre un dispositif de protection thermique supplémentaire 12 configuré pour maintenir les interrupteurs de limitation Q1, Q2 dans l'état ouvert lorsque l'échauffement d'au moins un interrupteur de limitation Q1, Q2 est supérieur à un seuil de référence. Par exemple, le dispositif de protection thermique supplémentaire 12 comprend un interrupteur électronique commandé de protection supplémentaire Q5, de préférence un transistor du type bipolaire NPN, couplé entre la borne de référence Bref, et d'une part la sortie VG1 du dispositif de commande 8, par l'intermédiaire d'une diode D1, et d'autre part la sortie VG2 du dispositif de commande supplémentaire 11, par l'intermédiaire d'une autre diode D3. En outre, la base du transistor de protection supplémentaire Q5 est couplée à la borne de sortie B3 du module d'éclairage 2 par l'intermédiaire d'une résistance R2. Avantageusement, le dispositif de protection thermique supplémentaire 12 comporte un condensateur de découplage C11 monté en parallèle de la résistance R2.

Ainsi, en fonctionnement normal, la tension d'alimentation VRSH est inférieure aux consignes de tension Vpont et Vpont2, et les transistors de limitation Q1 et Q2 sont dans un état passant pour alimenter la LED. En cas de court-circuit, la tension d'alimentation VRSH est supérieure aux consignes de tension Vpont, Vpont2 et les dispositifs de commande 8, 11 commandent respectivement les transistors de limitation Q1, Q2 dans l'état non passant. Ainsi, la tension d'alimentation VRSH chute jusqu'à être inférieure aux consignes de tension Vpont, Vpont2 et les dispositifs de commande 8, 11 commandent à nouveau la fermeture des transistors de limitation Q1, Q2 pour alimenter la LED. Ainsi, on limite le courant d'alimentation In à la valeur maximum Imax. En outre, lorsque la tension aux bornes des transistors de limitation Q1, Q2 augmente et que les transistors Q1, Q2 s'échauffent, la tension base-émetteur Vbe des transistors de protection Q4, Q5 dépasse alors leur tension de seuil et les transistors de protection Q4, Q5 deviennent passant. Ainsi, les transistors de limitation Q1, Q2 sont maintenus dans l'état bloqué dans lequel ils ne chauffent plus.

Une telle lampe dotée à la fois d'un dispositif de limitation du courant et d'un dispositif de protection thermique est particulièrement adaptée pour une utilisation en milieu explosif.

## Revendications

1. Lampe électrique portative comprenant un module d'éclairage (2), et un boîtier compact (3) renfermant une source d'alimentation (4) pour alimenter le module d'éclairage (2) et un dispositif de limitation (5) d'un courant (In) délivré par la source d'alimentation (4), le dispositif de limitation (5) comprenant un dispositif de commande (8) et un transistor de limitation (Q1) dont le drain est couplé à une borne de sortie (B3) du module d'éclairage (2) et la grille est couplée à une borne de sortie (VG1) du dispositif de commande (8), le dispositif de limitation (5) comprenant un élément résistif (RSH) couplé entre une borne de référence (Bref) de la source d'alimentation (4) et la source du transistor de limitation (Q1), le dispositif de commande (8) étant configuré pour déterminer une tension d'alimentation (VRSH) aux bornes de l'élément résistif (RSH) et pour commander le transistor de limitation (Q1) de façon qu'il soit dans un état fermé lorsque la tension d'alimentation (VRSH) est inférieure ou égale à une consigne de tension, **caractérisé en ce que** le dispositif de limitation (5) comporte en outre un dispositif de protection thermique (9) configuré pour maintenir le transistor de limitation (Q1) dans un état ouvert lorsque la tension entre le drain et la source du transistor de limitation (Q1) est supérieure à une tension de référence.

2. Lampe selon la revendication 1, dans laquelle le transistor de limitation (Q1) est un transistor du type NMOS.

3. Lampe selon la revendication 1 ou 2, dans laquelle le dispositif de protection thermique (9) comprend un interrupteur commandé de protection (Q4) couplé entre la borne de sortie du dispositif de commande (8) et la borne de référence (Bref), le dispositif de protection thermique (9) étant configuré pour maintenir l'interrupteur de protection (Q4) dans un état fermé lorsque la tension entre le drain et la source du transistor de limitation (Q1) est supérieure à la tension de référence.

4. Lampe selon la revendication 3, dans laquelle l'interrupteur de protection (Q4) est un transistor de protection du type bipolaire dont la base est couplée à la borne de sortie (B3) du module d'éclairage, la tension de référence étant égale à la tension de seuil du transistor de protection (Q4).

5. Lampe selon la revendication 3, dans laquelle le dispositif de protection thermique (9) comprend un capteur de température, et commande l'interrupteur de protection (Q4) dans l'état fermé lorsque la température du transistor de limitation (Q1) est supérieure à une température de référence.

6. Lampe selon l'une des revendications 1 à 5, dans laquelle le dispositif de commande (8) comprend un comparateur de tension (U3) ayant une sortie couplée à la borne de sortie (VG1) du dispositif de commande (8), et deux entrées respectivement couplées aux deux bornes de l'élément résistif (RSH) pour déterminer la tension d'alimentation (VRSH).

7. Lampe selon l'une des revendications 1 à 6, comprenant un dispositif de limitation supplémentaire (10) pour limiter le courant d'alimentation (In) délivré par la source d'alimentation (4), le dispositif de limitation supplémentaire (10) comprenant un dispositif de commande supplémentaire (11) et un interrupteur commandé supplémentaire (Q2) couplé entre le drain dudit transistor de limitation (Q1) et la borne de sortie (B3) du module d'éclairage (2), l'interrupteur commandé supplémentaire (Q2) comprenant un organe de commande couplé à une borne de sortie (VG2) du dispositif de commande supplémentaire (11), le dispositif de commande supplémentaire (11) étant configuré pour déterminer la tension d'alimentation (VRSH) et pour commander l'interrupteur supplémentaire (Q2) de façon qu'il soit dans un état fermé lorsque la tension d'alimentation (VRSH) est inférieure ou égale à la consigne de tension.

8. Lampe selon la revendication 7, dans laquelle l'interrupteur commandé supplémentaire (Q2) est un transistor de limitation supplémentaire et le dispositif de limitation supplémentaire (10) comporte en outre un dispositif de protection thermique supplémentaire (12) comportant un transistor de protection supplémentaire (Q5) du type bipolaire, le dispositif de protection thermique supplémentaire (12) étant configuré pour maintenir les transistors de limitation (Q1, Q2) dans un état ouvert lorsque la tension base-émetteur des transistors de protection (Q4, Q5) est supérieure à leur tension de seuil.

9. Lampe selon la revendication 8, dans laquelle le transistor de protection supplémentaire (Q5) est couplé entre la borne de référence (Bref), et d'une part la borne de sortie (VG1) du dispositif de commande (8), et d'autre part la borne de sortie (VG2) du dispositif de commande supplémentaire (11), la base du transistor de protection supplémentaire (Q5) étant couplée à la borne de sortie (B3) du module d'éclairage (2).
